# EUROPÄISCHE PATENTSCHRIFT

(11) **EP 4 673 349 B1**
(45) Veröffentlichungstag und Bekanntmachung des Hinweises auf die Patenterteilung: **29.04.2026**
(21) Anmeldenummer: 25719678.2
(22) Anmeldetag: 10.04.2025
(51) Int. Cl.: B60W 30/18, B60W 30/16

(54) **VORRICHTUNG UND VERFAHREN ZUR DURCHFÜHRUNG EINES SPURWECHSELS FÜR EIN AUTONOM BETRIEBENES FAHRZEUG**
DEVICE AND METHOD FOR CARRYING OUT A LANE CHANGE FOR AN AUTONOMOUSLY OPERATED VEHICLE
DISPOSITIF ET PROCÉDÉ POUR EFFECTUER UN CHANGEMENT DE VOIE POUR UN VÉHICULE AUTONOME

(30) Priorität: 23.05.2024 DE 102024001658
(43) Veröffentlichungstag der Anmeldung: 07.01.2026
(73) Patentinhaber: Mercedes-Benz Group AG, 70372 Stuttgart (DE)
(72) Erfinder: KÄFER, Eugen, 71272 Renningen (DE)
(74) Vertreter: Novagraaf Group
(86) Internationale Anmeldenummer: PCT/EP2025/059882
(87) Internationale Veröffentlichungsnummer: WO 2025/242358

(56) Entgegenhaltungen:
- DE-A1- 102011 016 770
- DE-A1- 102018 221 860
- DE-A1- 102022 110 247

## Beschreibung

Die Erfindung betrifft eine Vorrichtung und ein Verfahren zur Durchführung eines Spurwechsels für ein autonom betriebenes Fahrzeug von einer Istspur auf eine Zielspur, aufweisend eine die Bewegung des Fahrzeugs kontrollierende Kontrolleinheit und eine Sensoreinheit zum kontinuierlichen Erfassen eines vorderen und eines hinteren Zielspurabstandes zwischen einem vorderen und einem hintern Zielspur-Nachbarfahrzeug auf der Zielspur und eines vorderen und eines hinteren Istspurabstandes zwischen einem vorderen und einem hinteren Istspur-Nachbarfahrzeug auf der Istspur sowie und zum Übermitteln dieser Daten an die Kontrolleinheit. Die Erfindung betrifft ein damit ausgestattetes Fahrzeug.

Aus der DE 10 2011 016 770 ist ein Verfahren zur Durchführung eines Spurwechsels für ein autonom betriebenes Fahrzeug bekannt, bei dem eine Spurwechselabsicht mit auf einer Zielspur befindlichen Fahrzeugen durch eine Annäherung an eine die Istspur und die Zielspur trennende Fahrspurmarkierung angezeigt wird und der Spurwechsel erst dann erfolgt, wenn ein ausreichender Abstand zu den vorne und hinten benachbarten Fahrzeugen festgestellt wird.

Aus der DE 10 2021 002 900 A1 ist ein Verfahren bekannt, bei dem zunächst ein Fahrtrichtungsanzeiger aktiviert wird und nach Ablauf einer gewissen Zeitspanne eine Annährung an die Fahrspurmarkierung auch dann durchgeführt wird, wenn unter Berücksichtung der üblichen Bremswege kein ausreichender Freiraum auf der Zielspur detektiert wurde, um den Fahrzeugen auf der Zielspur die Spurwechselabsicht deutlicher zu kommunizieren.

Aus der DE 10 2022 110 247 A1 ein Verfahren zum Unterstützen eines Nutzers eines Fahrzeugs beim Manövrieren des Fahrzeugs auf einer mehrspurigen Straße bekannt. Das Verfahren umfasst ein Empfangen eines Navigationsbefehls zum Führen des Fahrzeugs von einem zweiten Fahrstreifen der Straße über einen ersten Fahrstreifen der Straße auf einer Ausfahrt. Ein Spurwechselmanöver von dem zweiten Fahrstreifen auf den ersten Fahrstreifen wird vorbereitet und geeignete Lücken für das Fahrzeug zwischen weiteren Verkehrsteilnehmern auf dem ersten Fahrstreifen zur Durchführung des Spurwechselmanövers werden gesucht. Falls keine geeignete Lücke auf dem ersten Fahrstreifen gefunden wird, erfolgt ein Suchen einer bezogen auf die Abmessungen aktuell ungeeigneten Lücke zwischen den Verkehrsteilnehmern auf dem ersten Fahrstreifen. Das Verfahren umfasst ein Ausführen von zumindest einem Fahrmanöver und/oder zumindest einer Fahrzeugfunktion derart, dass zumindest den Verkehrsteilnehmern, welche die ungeeignete Lücke begrenzen, eine Intention für das Durchführen des Spurwechselmanövers durch das Fahrzeug in die ungeeignete Lücke angezeigt wird.

Die DE 10 2011 016 770 A1 offenbart ein Verfahren zur Unterstützung eines Fahrers eines Fahrzeugs bei einem Fahrspurwechsel von einer Momentanfahrspur auf eine benachbarte Zielfahrspur. Nach einer einen beabsichtigten Fahrspurwechsel anzeigenden Aktion des Fahrers in einem ersten, den Fahrspurwechsel vorbereitenden Verfahrensschritt wird das Fahrzeug durch einen Eingriff in eine Lenkvorrichtung, Bremsvorrichtung und/oder in einen Antriebsstrang in eine für den Fahrspurwechsel geeignete Fahrspurwechsel-Ausgangsposition gebracht, indem ein seitlicher Abstand des Fahrzeugs zur Zielfahrspur auf einen vorgegebenen Ausgangsposition-Querabstand verkleinert wird. In einem zweiten, den Fahrspurwechsel durchführenden Verfahrensschritt wird durch einen Eingriff in die Lenkvorrichtung, Bremsvorrichtung und/oder in den Antriebsstrang des Fahrzeugs auf die Zielfahrspur gewechselt, wenn auf der Zielfahrspur ein ausreichender Freiraum für das Fahrzeug ermittelt wurde.

Davon ausgehend liegt der Erfindung die Aufgabe zugrunde, selbst dann einen Vergrößerung der Eintauchtiefe (Spurwechsel zu versuchen, wenn ein ausreichender Freiraum nicht verfügbar ist.

Die Erfindung ist durch den Gegenstand der unabhängigen Ansprüche definiert; die abhängigen Ansprüche geben mögliche Ausführungsformen an.

Dabei wird die Aufgabe erfindungsgemäß mit einer Vorrichtung zur Durchführung eines Spurwechsels für ein autonom betriebenes Fahrzeug, im weiteren auch Eigenfahrzeug genannt, von einer Istspur auf eine Zielspur, aufweisend eine die Bewegung des Eigenfahrzeug kontrollierende Kontrolleinheit und eine Sensoreinheit zum kontinuierlichen Erfassen eines vorderen und eines hinteren Zielspurabstandes zwischen dem Fahrzeug und einem vorderen und einem hinteren Zielspur-Nachbarfahrzeug auf der Zielspur sowie zum Übermitteln dieser Daten an die Kontrolleinheit, wobei wenn der erfasste vordere Zielspurabstand größer ist als ein vorderer Zielspur-Mindestabstand aber kleiner als ein vorderer Zielspur-Sollabstand und der erfasste hintere Zielspurabstand größer ist als ein hinterer Zielspur-Mindestabstand aber kleiner als ein hinterer Zielspur-Sollabstand, die Kontrolleinheit:
- ein Eintauchen des Fahrzeugs um eine vorbestimmte Eintauchtiefe e senkrecht zur Bewegungsrichtung in die Zielspur bewirkt, wobei die Eintauchtiefe e zwischen der zielspurseitigen Außenkante des Fahrzeugs zu einer istspurseitigen Außenkante des vorderen Zielspur-Nachbarfahrzeugs bestimmt ist,
- anschließend das Fahrzeug für einen vorgegebenen Zeitraum in dieser Eintauchtiefe hält, wobei, wenn währenddessen die Zielspurabstände die Zielspur-Sollabstände erreichen, das Fahrzeug zur Vollendung des Spurwechsels bewegt, anderenfalls das Fahrzeug nach dem Ende des Zeitraumes zum Abbruch des Spurwechsels und zur Rückkehr auf die Istspur zurückbewegt gelöst.

Durch dieses von der Kontrolleinheit durchgeführte Verfahren ist es möglich, auch bei einer unter normalen Umständen zu kleinen Lücke mit zwischen zwei Fahrzeugen V1 und V2 auf der Zielspur eine Lücke dadurch aktiv zu schaffen, dass das Eigenfahrzeug um eine gewisse Strecke e in die Zielspur bewegt wird und damit das in der Zielspur folgende Fahrzeug V2 veranlasst wird, durch kurzzeitige Verzögerung den Abstand zu dem in die Zielspur eintauchenden Eigenfahrzeug auf den hinteren Zielspur-Sollabstand durch kurzzeitiges Abbremsen zu vergrößern und einen sicheren Spurwechsel der Eigenfahrzeugs zu gewähren. Eine zu kleine Lücke ist immer gegeben, wenn die Abstände des Eigenfahrzeugs zu einem vorderen und hinteren Fahrzeug auf der Zielspur einen kritischen, vorliegende durch die Zielspur-Sollabstände repräsentierten Abstand unterschreiten. Werden jeweils zum vorderen und hinteren Fahrzeug auf der Zielspur die Zielspur-Sollabstände eingehalten, kann ein Spurwechsel des Eigenfahrzeugs ohne Restriktionen durchgeführt werden, werden die Zielspur-Sollabstände unterschritten, sind jedoch höher als die Zielspur-Mindestabstände dann erfolgt ein Spurwechsel gemäß dem erfindungsgemäßen Verfahren und Werden die Zielspur-Mindestabstände unterschritten erfolgt kein Spurwechsel.

Natürlich wird vor der Einleitung des erfindungsgemäßen Spurwechsels ein Fahrtrichtungsanzeiger (Blinker) betätigt und es kann danach zunächst eine gewisse Zeit abgewartet werden, ob das in der Zielspur hinterherfahrende Fahrzeug V2 bereits hierdurch veranlasst wird, die Lücke zum Eigenfahrzeug zu vergrößern.

Es werden also im Rahmen der Erfindung die Abstände in Fahrtrichtung zu einem auf der Zielspur vorausfahrenden Fahrzeug V1 und einem hinterherfahrenden Fahrzeug V2 ermittelt. Ferner wird die Eintauchtiefe e, der vordere Zielspur-Mindestabstand und der vordere Zielspur-Sollabstand berechnet, sowie der hintere Zielspur-Mindestabstand und der hintere Zielspur-Sollabstand.

Die Eintauchtiefe e ist, wie bereits ausgeführt, die Entfernung in Querrichtung (y-Richtung bezogen auf ein Fahrzeug-System) zwischen der zielspurseitigen (in Ländern mit Rechtsverkehr der linken) Außenkante des Fahrzeugs zu einer istspurseitigen (in Ländern mit Rechtsverkehr der rechten) Außenkante des vorderen Zielspur-Nachbarfahrzeugs V1. Wenn e null ist, würde das Eigenfahrzeug das vorausfahrende Fahrzeug V1 gerade streifen, wenn man an diesem rechts vorbeifahren würde. Die Eintauchtiefe e wird zunächst auf einen Wert von 0,3 bis 0,7m festgelegt, vorzugsweise auf 0,4m - 0,6m.

Der vordere Zielspur-Sollabstand wird vorzugsweise auf der Grundlage der aktuellen Fahrgeschwindigkeit und einer Summe von Zeitwerten bestimmt und zwar der Summe aus einer Systemreaktionszeit, welche die Kontrolleinheit benötigt, um aus den diversen Sensordaten Zustandsdaten des Fahrzeugs und der Umgebung zuverlässig zu berechnen. Diese liegt typischerweise im Bereich von etwa 0,1 bis 0,5 sek. Diese Systemreaktionszeit wird zu einer Komfort-Bremszeit addiert, welche das Fahrzeug bei der aktuellen Geschwindigkeit benötigt, um "komfortabel" zum Stillstand abzubremsen, falls das vorausfahrende Fahrzeug heftig bremst oder durch ein Hindernis zu einem sofortigen Stopp gezwungen wird, wobei die Bremsverzögerung noch in einem komfortablen Bereich liegt, also im Bereich von 4 bis 5 m/s². Diese Komfort-Bremszeit ist natürlich auch abhängig von äußeren Umständen wie Temperatur, Bodenbeschaffenheit, Feuchte etc, da bei nasser Fahrbahn die Zeitdauer bis zum Stillstand größer ist als bei trockener Fahrbahn. Jedenfalls wird aus der Summe der Systemreaktionszeit und der Komfort-Bremszeit eine Gesamtzeit errechnet, aus der mit der aktuellen Geschwindigkeit des Eigenfahrzeugs der vordere Zielspur-Sollabstand errechnet wird.

Der hintere Zielspur-Sollabstand wird vorzugsweise auf gleiche Weise bestimmt, nur kann anstelle der Systemreaktionszeit eine längere Reaktionszeit angesetzt werden, wenn über Sensoren oder Fahrzeug-zu-Fahrzeug-Kommunikation nicht gesichert festgestellt werden kann, dass das nachfolgende Fahrzeug V2 ebenfalls autonom betrieben wird, weil bei einem manuell betriebenen Fahrzeug eine längere Reaktionszeit eines Fahrers von etwa einer Sekunde angenommen werden sollte. Die beiden Zielspur-Sollabstände sind also vorzugsweise nicht gleich.

Zur Berechnung des vorderen Zielspur-Mindestabstandes wird davon ausgegangen, dass das Eigenfahrzeug im Fall eines plötzlichen Verzögerungsvorgangs des in der Zielspur vorausfahrenden Fahrzeugs V1 nicht in der Spur bleibend mitbremst sondern auf die Istspur zurückbewegt wird, um eine Kollision mit V1 zu vermeiden. Neben der Systemreaktionszeit wird also eine Rückfahrzeit bestimmt, welche unter Berücksichtung von zulässigen Querverzögerungen und sonstigen Einflussfaktoren benötigt wird, um das Fahrzeug um die Querstrecke der Eintauchtiefe e wieder soweit zurück in Richtung der Istspur zu bewegen, um seitlich am vorausfahrenden Fahrzeug V1 vorbeizufahren, vorzugsweise bei gleichzeitiger Bremsverzögerung, weil der Grund für das plötzliche Abbremsen des Fahrzeugs V1 auf der Zielspur ja gleichermaßen für ein vorausfahrendes Fahrzeug V3 auf der Istspur gelten kann, also auch dieses vorausfahrende Fahrzeug V3 auf der Istspur in gleicher Weise wie V1 abbremst.

Der hintere Zielspur-Mindestabstand kann geringer sein als der vordere Zielspur-Mindestabstand, vorzugsweise das 0,5 bis 0,8-fache des vorderen Zielspur-Mindestabstandes, da das Eigenfahrzeug im Fall eines plötzlichen Bremsvorgangs des vorausfahrenden Fahrzeugs V1 ja in erster Linie eine Ausweichbewegung zurück auf die Istspur durchführt und damit der Abstand zum hinterherfahrenden Fahrzeug V2 nicht plötzlich erheblich verringert wird. Da das Eigenfahrzeug keinen vollständigen Spurwechsel durchführt sondern nur um die Strecke e in die Zielspur eintaucht, also mit anderen Worten auf beiden Spuren zugleich fährt, wird das auf der Istspur hinterherfahrende Fahrzeug V4 typischerweise den bestehenden Abstand unverändert lassen oder nur langsam verringern, bis das Eigenfahrzeug vollständig in die Zielspur eingetaucht ist.

Das Eigenfahrzeug wird also erfindungsgemäß, sofern weder der vordere noch der hintere Zielspur-Mindestabstand unterschritten wird, in die Zielspur weiter bewegt, bis die Eintauchtiefe e erreicht ist, und dann dort für eine gewisse Zeit gehalten. Sofern das hintere Fahrzeug V2 auf der Zielspur in Folge der Wahrnehmung der Bewegung des Eigenfahrzeugs die eigene Geschwindigkeit zumindest kurzzeitig herabsetzt, um den Abstand zum Eigenfahrzeug zu erhöhen, ist es gemäß einer bevorzugten Weiterbildung der Erfindung möglich, die Eintauchtiefe e zu vergrößern, das Eigenfahrzeug also noch weiter in die Zielspur hineinzubewegen.

Gemäß einer bevorzugten Weiterbildung der Erfindung ist es auch möglich, das Eigenfahrzeug kurzzeitig zu verzögern, um einerseits den vorderen Abstand zum vorausfahrenden Fahrzeug V1 zu erhöhen und gleichzeitig durch die Verringerung des Abstandes zum hinteren Zielspur-Nachbarfahrzeug V2 dieses zu veranlassen, über einen kurzzeitigen Bremsvorgang diesen Abstand zu vergrößern.

Gemäß einer Weiterbildung der Erfindung ist die Sensoreinheit eingerichtet zum kontinuierlichen Erfassen eines vorderen und eines hinteren Abstandes zwischen dem Eigenfahrzeug und einem vorderen und hinteren Istspur-Nachbarfahrzeug , wobei die Kontrolleinheit einen Abbruch des Spurwechselmanövers und eine Rückkehr zur Istspur veranlasst, wenn die Sensoreinheit eine Unterschreitung eines Istspur-Sollabstandes (sIV) zum vorderen Istspur-Nachbarfahrzeug V3 oder eine Unterschreitung eines Istspur-Sollabstandes (sIH) zum hinteren Istspur-Nachbarfahrzeug V4 detektiert oder die Kontrolleinheit aus den Messdaten der Sensoreinheit eine Unterschreitung prädiziert. Hierdurch wird gewährleistet, dass die Option auf Rückkehr in die Istspur nicht dadurch abgeschnitten wird, weil dort die Abstände zu dem vorderen Fahrzeug V3 und dem hinteren Fahrzeug V4 auf der Istspur I nach vorn und hinten zu gering sind. Sofern von der Kontrolleinheit prädiziert wird, dass aufgrund dynamischer Veränderungen, d.h. entweder durch Abbremsung des auf der Istspur vorausfahrenden Fahrzeugs V3 oder Beschleunigung des auf der Istspur hinterher fahrenden Fahrzeugs V4 zu erwarten ist, dass einer der Sollabstände unterschritten wird, so würde die erfindungsgemäß wichtige Option des Notfall-Ausweichmanövers beispielsweise beim Abbremsen des auf der Zielspur vorausfahrenden Fahrzeugs V1 in Form der Rückkehr auf die Istspur wegfallen und es könnte potentiell eine gefährlichen Situation entstehen. Daher wird auch in einem solchen Fall der Spurwechselvorgang aus Sicherheitsgründen abgebrochen.

Gemäß einer Weiterbildung der Erfindung umfasst die Vorrichtung eine nach rückwärts gerichtete Anzeigeeinheit, wobei die Kontrolleinheit bei Einleitung des Spurwechsels den hinteren Zielspur-Sollabstand an das hintere Zielspur-Nachbarfahrzeug V2 übermittelt.

Gemäß einer Weiterbildung der Erfindung umfasst das Fahrzeug eine Fahrzeug-zu-Fahrzeug-Kommunikationseinheit (Car2x), und die Kontrolleinheit übermittelt bei Einleitung des Spurwechsels den hinteren Zielspur-Sollabstand an das hintere Zielspur-Nachbarfahrzeug V2, damit dieses, sofern es autonom betrieben wird, durch einen Bremsvorgang den Abstand auf den hinteren Zielspur-Sollabstand vergrößert.

Gemäß einer weiteren Ausbildung der Erfindung umfasst diese auch die Durchführung des oben beschriebenen Verfahrens unter Verwendung der Vorrichtung.

Gemäß einer weiteren Ausbildung der Erfindung umfasst diese auch ein mit der erfindungsgemäßen Vorrichtung ausgestattetes Fahrzeug.

Die Erfindung ist bisher im Zusammenhang mit einem Spurwechsel von einer langsameren rechten Fahrspur auf eine linke Überholspur beschrieben worden. Ein Spurwechsel von einer Überholspur auf eine (rechte) langsamere Spur funktioniert nach dem gleichen Verfahren. Auch funktioniert das Verfahren umgekehrt in Ländern mit Linksverkehr.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Figur 1:: schematisch eine Vorrichtung zur Durchführung eines Spurwechsels für ein autonom betriebenes Fahrzeug;
- Figur 2:: ein Flussdiagramm der erfindungsgemäßen Verfahrensschritte;
- Figur 3:: schematisch einen Fahrbahnabschnitt mit zwei Fahrspuren und Fahrzeugen vor Beginn eines Spurwechsels;
- Figur 4:: schematisch den Fahrbahnabschnitt von Fig. 2 während des Spurwechsels.

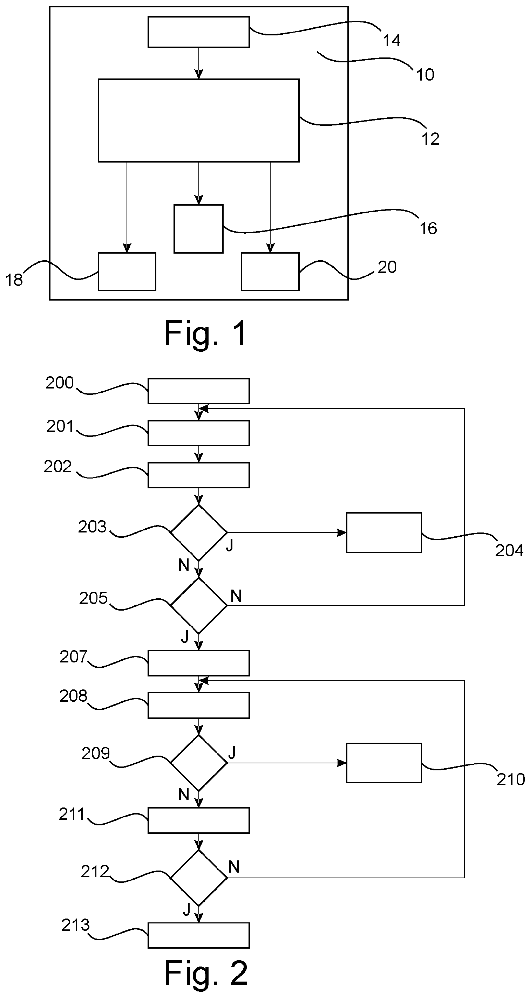

Fig.1 zeigt eine Vorrichtung 10 zur Durchführung eines Spurwechsels für ein autonom betriebenes Fahrzeug, umfassend eine Kontrolleinheit 12, sowie eine Sensoreinheit 14, umfassend eine Vielzahl an Umgebungssensoren vorzugsweise optischer und radartechnischer Art zur Erfassung der Fahrzeugumgebung, insbesondere von Entfernungen und Richtungen zu umgebenden Fahrzeugen. Ferner umfasst die Vorrichtung 10 eine Antriebs- und Lenkungseinheit 16 zur Ansteuerung des damit versehenden Eigenfahrzeugs, um die Bewegungen des Eigenfahrzeugs zu steuern, insbesondere dieses zu lenken, Antriebs- und Bremsvorgänge zu steuern und einen Fahrtrichtungsanzeiger zu betätigen. Die Vorrichtung 10 umfasst optional noch eine nach hinten gerichtete Anzeigeeinheit 18, um einem nachfolgenden Fahrzeug Informationen zu vermitteln. Die Vorrichtung umfasst optional noch eine Fahrzeug-zu-Fahrzeug-Kommunikationseinheit 20, beispielsweise gemäß dem Car2x-System, um über Funk mit Fahrzeugen in der Umgebung Daten auszutauschen.

Fig. 2 zeigt ein Flussdiagramm der erfindungsgemäßen Verfahrensschritte. Ausgangspunkt ist ein von einem Navigationssystem, das vorzugsweise ebenfalls Bestandteil der Kontrolleinheit 12 ist, bestimmter Bedarf für einen Spurwechsel des Eigenfahrzeugs 24 im Schritt 200, beispielsweise weil auf der Zielspur Z die Geschwindigkeit der Fahrzeuge höher ist als auf der Istspur I und damit ein Fahrziel schneller erreicht werden kann.

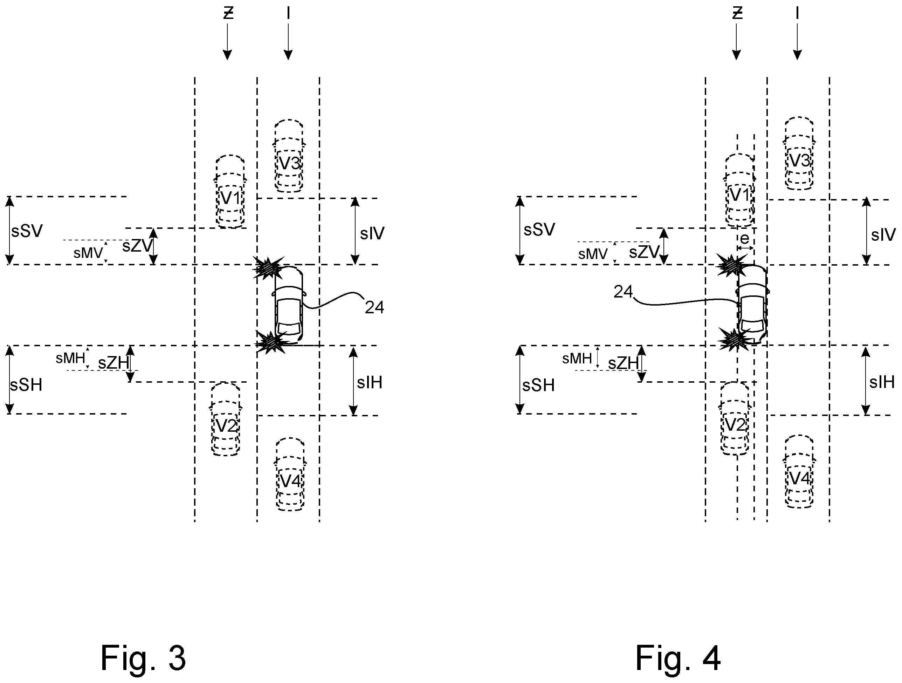

Fig. 3 und Fig. 4 zeigen dazu schematisch einen Fahrbahnabschnitt mit einem Eigenfahrzeug 24, das sich auf einer Istspur I einer (mindestens) zweispurigen Fahrbahn vor Einleitung eines geplanten Spurwechsels befindet sowie einen bereits begonnenen Spurwechsel. In Fig. 3 befindet sich vor dem Eigenfahrzeug 24 befindet auf der Istspur I ein vorausfahrendes Fahrzeug V3 und ein hinterherfahrendes Fahrzeug V4, die sich mit näherungsweise der gleichen Geschwindigkeit bewegen wie das Eigenfahrzeug 24. Links von der Istspur befindet sich eine zweite Fahrspur, nämlich eine Zielfahrspur Z, auf welche das Eigenfahrzeug 24 zu wechseln beabsichtigt. Dort befinden sich ebenfalls zwei Fahrzeuge, ein vorausfahrendes, vorderes Zielspur-Nachbarfahrzeug V1 und ein hinterherfahrendes hinteres Zielspur-Nachbarfahrzeug V2. Die Erfindung ist natürlich in gleicher Weise anwendbar, wenn die Zielspur Z sich rechts von der Istspur I befinden würde.

Wie im Flussdiagramm im Schritt 201 dargestellt, erfasst die Kontrolleinheit 12 kontinuierlich über die Sensoren der Sensoreinheit 14 die Entfernungen und Richtungen zu allen vier Fahrzeugen V1, V2, V3, V4. Im Schritt 202 berechnet die Kontrolleinheit 12 daraus die in Fig. 3 und Fig. 4 dargestellten Abstände des Eigenfahrzeuges 24 zu diesen Fahrzeugen V1, V2, V3, V4, wobei Abstände in Fahrtrichtung des Eigenfahrzeugs 24 berechnet werden, insbesondere der Abstand sZV (in Fahrtrichtung) des Eigenfahrzeugs 24 zu dem vorausfahrenden Zielspur-Nachbarfahrzeug V1 und der Abstand sZH (in Fahrtrichtung) des Eigenfahrzeugs 24 zu dem hinterherfahrenden Zielspur-Nachbarfahrzeug V2. Im Schritt 202 werden anhand der Fahrgeschwindigkeit und ggf. weiterer Daten wie Fahrbahnbeschaffenheit, Feuchte, Temperatur des Eigenfahrzeugs 24 für die Zielspur Z laufend der vordere Zielspur-Sollabstand sSV und der hintere Zielspur-Sollabstand sSH sowie der vordere Istspur-Sollabstand sIV und der hintere Istspur-Sollabstand sIH berechnet, wie dies weiter oben beschrieben ist. Im Schritt 202 werden ferner die in Fig. 3 und Fig. 4 gezeigten Abstände des Eigenfahrzeugs 24 auf der Istspur I nach vorn und hinten bestimmt und die Sollabstände sIV und sIH des Eigenfahrzeug zu vorausfahrendem Fahrzeug V3 und folgendem Fahrzeug V4 auf der Istspur nach berechnet.

Im Schritt 203 wird geprüft, ob beide Sollabstände sSV und sSH eingehalten werden, also die gemessenen Abstände sZV und sZH auf der Zielspur Z größer sind als die Sollabstände sSV und sSH. Ist dies der Fall, kann die Kontrolleinheit 12 im Schritt 204 das Eigenfahrzeug 24 ohne Anwendung des erfindungsgemäßen Verfahrens zur Durchführung des Spurwechsels steuern.

Wenn mindestens einer der Sollabstände sSV und sSH unterschritten ist und somit ein gefahrloser Spurwechsel nicht möglich ist, so wird im Schritt 205 geprüft, ob zumindest die im Schritt 202 berechneten vorderen und hinteren Zielspur-Mindestabstände sMV und sMH überschritten werden, also ob die aktuellen Abstände sZV und sZH größer sind als diese Zielspur-Mindestabstände sMV, sMH. Ist dies nicht der Fall, wird also einer der Mindestabstände sMV, sMH unterschritten, so reicht dies für die Durchführung des erfindungsgemäßen Verfahrens nicht, so dass das Eigenfahrzeug 24 in der Istspur I verbleibt und und erneut im Schritt 201 die aktualisierten Abstandsdaten erfasst und im Schritt 202 die Abstände berechnet werden.

Werden hingegen beide Zielspur-Mindestabstände sMV, sMH überschritten, so betätigt die Kontrolleinheit 12 im Schritt 206 einen Fahrtrichtungsanzeiger bzw. Blinker. Dieser Zustand wird in Fig. 3 dargestellt. Entweder zeitgleich oder nach Ablauf einer gewissen Zeitspanne von 1 bis 2 sek. bewegt die Kontrolleinheit 12 das Eigenfahrzeug 24 im Schritt 206 soweit auf die Zielspur Z, bis die Eintauchtiefe e erreicht ist. Anschließend wird im Schritt 207 ein Timer gestartet.

Im Schritt 208 werden in gleicher Weise wie in den Schritten 201 und 202 die Abstände nach vorn und hinten sowohl auf der Istspur I als auch auf der Zielspur Z fortlaufend neu gemessen bzw. berechnet, weil das Eindringen des Fahrzeugs 24 in die Zielspur Z Auswirkungen auf das Verhalten des hinterherfahrenden Fahrzeugs V2 haben sollte, was ja genau Ziel dieser Bewegung ist.

Im Schritt 209 wird geprüft, ob die aktuellen Abstände sZV und sZH größer geworden sind als die vorderen und hinteren Sollabstände sSV, sSH und daher der Spurwechsel fortgesetzt werden kann. Ist dies der Fall, so wird im Schritt 210 von der Kontrolleinheit 12 die Vollendung des Spurwechsels veranlasst, bis sich das Eigenfahrzeug 24 mittig in der Zielspur Z fortbewegt.

Wenn sich der Abstand zum hinterherfahrenden Fahrzeug V2 vergrößert, dieses also abbremst um den Abstand zum Eigenfahrzeug 24 zu erhöhen, wird im Schritt 211 von der Kontrolleinheit 12 eine kurzzeitige Geschwindigkeitsreduzierung des Eigenfahrzeugs 24 veranlasst, um diesen hinteren Abstandsgewinn in einen vorderen Abstandsgewinn umzuwandeln und damit zu versuchen, den vorderen Abstand sZV soweit anwachsen zu lassen, dass dieser den vorderen Sollabstand sSV erreicht.

Im Schritt 212 wird geprüft, ob der vorgegebene Zeitraum tV überschritten wurde. Wenn dies der Fall ist und gemäß Schritt 209 währenddessen die vorderen und hinteren Sollabstände sSV, sSH nicht erreicht wurden, so wird der Spurwechselversuch als erfolglos abgebrochen und das Eigenfahrzeug wird im Schritt 213 von der Kontrolleinheit 12 wieder auf die Istspur I zurückbewegt. Wenn hingegen der vorgegebene Zeitraum tV noch nicht erreicht ist, so wird zum Schritt 208 zurückgekehrt, um die Abstände zu messen bzw. berechnen in dem Bemühen, das hinterherfahrende Fahrzeug V2 weiter zu einem begrenzten Bremsvorgang zu veranlassen, um genügend große Abstände für die gefahrlose Vollendung des Spurwechselvorgangs zu erreichen.

Im Schritt 212 wird ferner geprüft, ob die aktuellen Abstände auf der Istspur noch größer sind als die vorderen und hinteren Sollabstände sIV, sIH auf der Istspur. Ist dies nicht der Fall, so wird ebenfalls im Schritt 213 das Eigenfahrzeug 24 von der Kontrolleinheit 12 wieder auf die Istspur I zurückbewegt.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehenden Erläuterungen in der Beschreibung, definiert wird.

### Bezugszeichenliste

- 10: Vorrichtung
- 12: Kontrolleinheit
- 14: Sensoreinheit
- 16: Antriebs- und Lenkungseinheit
- 18: Anzeigeeinheit
- 20: Fahrzeug-zu-Fahrzeug-Kommunikationseinheit
- 24: Fahrzeug bzw. Eigenfahrzeug

- sZV: vorderer Zielspurabstand
- sMV: vorderer Zielspur-Mindestabstand
- sSV: vorderer Zielspur-Sollabstand

- sZH: hinterer Zielspurabstand
- sMH: hinterer Zielspur-Mindestabstand
- sSH: hinterer Zielspur-Sollabstand

- sIV: vorderer Istspur-Sollabstand
- sIH: hinterer Istspur-Sollabstand
- e: Eintauchtiefe

## Patentansprüche

1. Vorrichtung zur Durchführung eines Spurwechsels für ein autonom betriebenes Fahrzeug (24) von einer Istspur (I) auf eine Zielspur (Z), aufweisend eine die Bewegung des Fahrzeugs kontrollierende Kontrolleinheit (12) und eine Sensoreinheit (14) zum kontinuierlichen Erfassen eines vorderen und eines hinteren Zielspurabstandes (sZV, sZH) zwischen dem Fahrzeug (24) und einem vorderen und einem hinteren Zielspur-Nachbarfahrzeug (V1, V2) auf der Zielspur (Z) sowie zum Übermitteln dieser Daten an die Kontrolleinheit (12), wobei, wenn der erfasste vordere Zielspurabstand (sZV) größer ist als ein vorderer Zielspur-Mindestabstand (sMV) aber kleiner als ein vorderer Zielspur-Sollabstand (sSV) und der erfasste hintere Zielspurabstand (sZH) größer ist als ein hinterer Zielspur-Mindestabstand (sMH) aber kleiner als ein hinterer Zielspur-Sollabstand (sSH), die Kontrolleinheit (12):
- ein Eintauchen des Fahrzeugs (24) um eine vorbestimmte Eintauchtiefe (e) senkrecht zur Bewegungsrichtung in die Zielspur (Z) bewirkt, wobei die Eintauchtiefe (e) zwischen der zielspurseitigen Außenkante des Fahrzeugs (24) zu einer istspurseitigen Außenkante des vorderen Zielspur-Nachbarfahrzeugs (V1) bestimmt ist,
- anschließend das Fahrzeug (24) für einen vorgegebenen Zeitraum (tV) in dieser Eintauchtiefe (e) hält, wobei, wenn währenddessen die Zielspurabstände (sZV, sZH) die Zielspur-Sollabstände (sSV, sSH) erreichen, das Fahrzeug (24) zur Vollendung des Spurwechsels bewegt, anderenfalls das Fahrzeug (24) nach dem Ende des Zeitraumes (tV) zum Abbruch des Spurwechsels und zur Rückkehr auf die Istspur (I) zurückbewegt.

2. Vorrichtung nach Anspruch 1, **dadurch gekennzeichnet, dass** die Kontrolleinheit (12) den vorderen Zielspur-Mindestabstand (sMV) bestimmt als die während einer Zielspur-Mindestzeit zurückgelegte Fahrstrecke, wobei sich diese aus einer Systemreaktionszeit sowie der für ein Zurückfallen auf die Istspur (I) minimal benötigten Zeit zusammensetzt.

3. Vorrichtung nach Anspruch 1 oder 2, **dadurch gekennzeichnet, dass** die Kontrolleinheit (12) den hinteren Zielspur-Mindestabstand (sMH) bestimmt als die während eines Zeitraums von 0,3 - 0,7 sek zurückgelegte Wegstrecke.

4. Vorrichtung nach einem der vorhergehenden Ansprüche, **dadurch gekennzeichnet, dass** die Kontrolleinheit (12) das Fahrzeug (24) während des Zeitraumes (tV) bei Zunahme des vorderen Zielspurabstandes (sZV) zur insbesondere kontinuierlichen Vergrößerung der Eintauchtiefe (e) ansteuert.

5. Vorrichtung nach einem der vorhergehenden Ansprüche, **dadurch gekennzeichnet, dass** die Kontrolleinheit (12) das Fahrzeug (24) während des Zeitraumes (tV) verlangsamt und so den vorderen Zielspurabstand (sZV) vergrößert.

6. Vorrichtung nach einem der vorhergehenden Ansprüche, **dadurch gekennzeichnet, dass**
die Sensoreinheit (14) eingerichtet ist zum kontinuierlichen Erfassen eines vorderen und eines hinteren Abstandes zwischen dem Fahrzeug (24) und einem vorderen und einem hinteren Istspur-Nachbarfahrzeug (V3, V4) auf der Istspur (I) und
die Kontrolleinheit (12) das Spurwechselmanöver abbricht und zur Istspur (I) zurückkehrt, wenn eine Unterschreitung eines Istspur-Sollabstandes (sIV) zum vorderen Istspur-Nachbarfahrzeug V3 oder eine Unterschreitung eines Istspur-Sollabstandes (sIH) zum hinteren Istspur-Nachbarfahrzeug V4 detektiert oder prädiziert wird.

7. Vorrichtung nach Anspruch 1, **dadurch gekennzeichnet, dass** diese eine nach rückwärts gerichtete Anzeigeeinheit (18) umfasst, und die Kontrolleinheit (12) bei Einleitung des Spurwechsels den hinteren Zielspur-Sollabstand (sSH) an das hintere Zielspur-Nachbarfahrzeug (V2) übermittelt.

8. Vorrichtung nach Anspruch 1, **dadurch gekennzeichnet, dass** diese eine Fahrzeug-zu-Fahrzeug-Kommunikationseinheit (20) umfasst, und die Kontrolleinheit (12) bei Einleitung des Spurwechsels den hinteren Zielspur-Sollabstand (sSH) an das hintere Zielspur-Nachbarfahrzeug (V2) übermittelt.

9. Verfahren zur Durchführung eines Spurwechsels für ein autonom betriebenes Fahrzeug (24) von einer Istspur (I) auf eine Zielspur (Z) unter Verwendung der Vorrichtung (10) gemäß einem der vorhergehenden Ansprüche.

10. Fahrzeug (24) mit einer Vorrichtung nach einem der Ansprüche 1 bis 8.

## Claims

1. Device for performing a lane change for an autonomously operated vehicle (24) from an actual lane (I) to a target lane (Z), comprising a control unit (12) for controlling the movement of the vehicle and a sensor unit (14) for continuously detecting a front and a rear target lane distance (sZV, sZH) between the vehicle (24) and a front and a rear target lane neighboring vehicle (V1, V2) on the target lane (Z) and for transmitting these data to the control unit (12), wherein, if the detected front target lane distance (sZV) is greater than a front target lane minimum distance (sMV) but less than a front target lane target distance (sSV) and the detected rear target lane distance (sZH) is greater than a rear target lane minimum distance (sMH) but less than a rear target lane target distance (sSH), the control unit (12):
- causes the vehicle (24) to dip into the target lane (Z) by a predetermined immersion depth (e) perpendicular to the direction of movement, wherein the immersion depth (e) is determined between the target lane-side outer edge of the vehicle (24) and an actual lane-side outer edge of the front target lane neighboring vehicle (V1),
- then holds the vehicle (24) at this immersion depth (e) for a specified period (tV), wherein if, during this time, the target lane distances (sZV, sZH) reach the target lane target distances (sSV, sSH), the vehicle (24) moves to complete the lane change, and if not, after the end of the period (tV), the vehicle (24) moves back to abort the lane change and return to the actual lane (I).

2. Device according to claim 1, **characterized in that** the control unit (12) determines the front target lane minimum distance (sMV) as the road section traveled during a target lane minimum time, wherein this is composed of a system reaction time and the minimum time required to revert onto the actual lane (I).

3. Device according to claim 1 or 2, **characterized in that** the control unit (12) determines the rear target lane minimum distance (sMH) as the stretch of road traveled during a period of 0.3 - 0.7 seconds.

4. Device according to any of the preceding claims, **characterized in that** the control unit (12) controls the vehicle (24) during the period (tV) when the front target lane distance (sZV) increases, in particular to continuously increase the immersion depth (e).

5. Device according to any of the preceding claims, **characterized in that** the control unit (12) slows down the vehicle (24) during the period (tV) and thus increases the front target lane distance (sZV).

6. Device according to any of the preceding claims, **characterized in that**
the sensor unit (14) is configured to continuously detect a front and a rear distance between the vehicle (24) and a front and a rear actual lane neighboring vehicle (V3, V4) on the actual lane (I) and
the control unit (12) aborts the lane change maneuver and returns to the actual lane (I) if a shortfall in an actual lane target distance (sIV) to the front actual lane neighboring vehicle V3 or a shortfall in an actual lane target distance (sIH) to the rear actual lane neighboring vehicle V4 is detected or predicted.

7. Device according to claim 1, **characterized in that** the device comprises a rear-facing display unit (18), and the control unit (12) transmits the rear target lane target distance (sSH) to the rear target lane neighboring vehicle (V2) when the lane change is initiated.

8. Device according to claim 1, **characterized in that** the device comprises a vehicle-to-vehicle communication unit (20), and the control unit (12) transmits the rear target lane target distance (sSH) to the rear target lane neighboring vehicle (V2) when the lane change is initiated.

9. Method for performing a lane change for an autonomously operated vehicle (24) from an actual lane (I) to a target lane (Z) using the device (10) according to any of the preceding claims.

10. Vehicle (24) having a device according to any of claims 1 to 8.

## Revendications

1. Dispositif pour la mise en œuvre d'un changement de voie pour un véhicule (24) à fonctionnement autonome d'une voie réelle (I) à une voie cible (Z), présentant une unité de commande (12) commandant le déplacement du véhicule et une unité de détection (14) pour la détection en continu d'une distance de voie cible avant et arrière (sZV, sZH) entre le véhicule (24) et un véhicule voisin de voie cible avant et arrière (V1, V2) sur la voie cible (Z) et pour la transmission desdites données à l'unité de commande (12), dans lequel, si la distance de voie cible avant (sZV) détectée est supérieure à une distance minimale de voie cible avant (sMV) mais inférieure à une distance de consigne de voie cible avant (sSV) et si la distance de voie cible arrière (sZH) détectée est supérieure à une distance minimale de voie cible arrière (sMH) mais inférieure à une distance de consigne de voie cible arrière (sSH), l'unité de commande (12) :
- provoque une immersion du véhicule (24) d'une profondeur d'immersion (e) prédéterminée perpendiculaire à la direction de déplacement dans la voie cible (Z), dans lequel la profondeur d'immersion (e) est déterminée entre le bord extérieur côté voie cible du véhicule (24) et un bord extérieur côté voie réelle du véhicule voisin avant de voie cible (V1),
- maintient ensuite le véhicule (24) à ladite profondeur d'immersion (e) pendant une durée (tV) prédéterminée, dans lequel, si pendant ce temps les distances de voie cible (sZV, sZH) atteignent les distances de consigne de voie cible (sSV, sSH), le véhicule (24) est déplacé pour achever le changement de voie, sinon le véhicule (24) est déplacé de nouveau après la fin de la durée (tV) pour interrompre le changement de voie et revenir sur la voie réelle (I).

2. Dispositif selon la revendication 1, **caractérisé en ce que** l'unité de commande (12) détermine la distance minimale de voie cible avant (sMV) comme étant l'itinéraire de conduite parcouru pendant une durée minimale de voie cible, dans lequel celle-ci se compose d'un temps de réaction de système ainsi que du temps minimal nécessaire pour un retour sur la voie réelle (I).

3. Dispositif selon la revendication 1 ou 2, **caractérisé en ce que** l'unité de commande (12) détermine la distance minimale de voie cible arrière (sMH) comme étant le parcours parcouru pendant une durée allant de 0,3 à 0,7 seconde.

4. Dispositif selon l'une des revendications précédentes,
**caractérisé en ce que** l'unité de commande (12) commande le véhicule (24) pendant la durée (tV) en cas d'augmentation de la distance de voie cible avant (sZV) pour agrandir, en particulier en continu, la profondeur d'immersion (e).

5. Dispositif selon l'une des revendications précédentes,
**caractérisé en ce que** l'unité de commande (12) ralentit le véhicule (24) pendant la durée (tV), agrandissant ainsi la distance de voie cible avant (sZV).

6. Dispositif selon l'une des revendications précédentes,
**caractérisé en ce que**
l'unité de détection (14) est configurée pour détecter en continu une distance avant et arrière entre le véhicule (24) et un véhicule voisin de voie réelle avant et arrière (V3, V4) sur la voie réelle (I), et
l'unité de commande (12) interrompt la manœuvre de changement de voie et revient à la voie réelle (I) lorsqu'un dépassement vers le bas d'une distance de consigne de voie réelle (sIV) par rapport au véhicule voisin de voie réelle avant (V3) ou qu'un dépassement vers le bas d'une distance de consigne de voie réelle (sIH) par rapport au véhicule voisin de voie réelle arrière (V4) est détecté ou prédit.

7. Dispositif selon la revendication 1, **caractérisé en ce que** celui-ci comprend une unité d'affichage (18) orientée vers l'arrière, et l'unité de commande (12) transmet la distance de consigne de voie cible arrière (sSH) au véhicule voisin de voie cible arrière (V2) lors du déclenchement du changement de voie.

8. Dispositif selon la revendication 1, **caractérisé en ce que** celui-ci comprend une unité de communication de véhicule à véhicule (20), et l'unité de commande (12) transmet la distance de consigne de voie cible arrière (sSH) au véhicule voisin de voie cible arrière (V2) lors du déclenchement du changement de voie.

9. Procédé pour la mise en œuvre d'un changement de voie pour un véhicule (24) à fonctionnement autonome d'une voie réelle (I) vers une voie cible (Z) à l'aide du dispositif (10) selon l'une des revendications précédentes.

10. Véhicule (24) comportant un dispositif selon l'une des revendications 1 à 8.
